## Europäisches Patentamt

## European Patent Office

## Office européen des brevets

(19)

(11) Veröffentlichungsnummer: **0 096 388**
**B1**

(12) # EUROPÄISCHE PATENTSCHRIFT

(45) Veröffentlichungstag der Patentschrift:
**11.05.88**

(51) Int. Cl.⁴: **G 06 K 1/12**, G 03 B 27/46

(21) Anmeldenummer: **83105510.8**

(22) Anmeldetag: **03.06.83**

(54) Verfahren zur Verfilmung von Belegen und Vorrichtung zur Durchführung derselben.

(30) Priorität: **03.06.82 DE 3220977**
**03.02.83 DE 3303647**

(43) Veröffentlichungstag der Anmeldung:
**21.12.83 Patentblatt 83/51**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**DE - A - 3 112 494**
**FR - A - 1 283 448**
**US - A - 4 116 560**
**US - A - 4 283 621**

**Lexikon der Datenverarbeitung, 1969, S. 410, 411**
**Steinbuch, Weber: "Taschenbuch der Informatik", 1974,**
**S. 416**

(73) Patentinhaber: **Klosterhuber, Rolf, Stieglitzweg 17,**
**D-8033 Krailling (DE)**
Patentinhaber: **Herrle, Wolfgang,**
**Hohenzollernstrasse 14, D-8000 München 40 (DE)**

(72) Erfinder: **Klosterhuber, Rolf, Stieglitzweg 17,**
**D-8033 Krailling (DE)**
Erfinder: **Herrle, Wolfgang, Hohenzollernstrasse 14,**
**D-8000 München 40 (DE)**

(74) Vertreter: **Diehl, Hermann O. Th., Dr., Flüggenstrasse 17,**
**D-8000 München 19 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur Verfilmung von Belegen, bei dem die Belege mit einem ersten Code versehen und anschliessend unter Aufbringung von Bildmarken verfilmt werden, sowie Vorrichtungen zur Durchführung dieses Verfahrens.

In der US-A-4 283 621 (Pembroke) ist ein derartiges Verfahren beschrieben, bei dem von dem ersten als Strichcode aufgebrachten Code eine den Beleg kennzeichnende Adresse gebildet und die auf den Film aufbelichteten Bildmarken fortlaufend aufsummiert werden, wobei das Ergebnis dieser Aufsummierung als jeweilige Bildadresse in Zuordnung zu der den Beleg kennzeichnenden Adresse abgespeichert wird. Dieses Vorgehen bezweckt, anschliessend mit Hilfe der abgespeicherten Information auf dem Film den gewünschten Beleg schnell wieder aufzufinden. Zusammen mit einer EDV-Erfassung der verfilmten Belege liesse sich auf diesem Wege eine an sich ideale Archivierung ermöglichen, wenn bei der Verfilmung und bei der EDV-Erfassung fehlerfrei gearbeitet würde. Dies ist jedoch leider nicht der Fall. Es hat sich vielmehr erwiesen, dass auch bei dieser Art der Archivierung Fehler auftreten können, die ein sicheres Wiederauffinden eines Beleges verhindern. Als Beispiele für Störungen, die zu solchen Fehlern führen können, seien folgende Situationen erwähnt:

Bedingt durch äussere Störungen können Impulsmarken auf dem Film entstehen, ohne dass ein Beleg vorhanden ist; bei der Aufnahme eines Belegs, beispielsweise wenn dieser verletzt ist, können versehentlich mehrere Bildmarken auf den Film aufgebracht werden. Desweiteren können Belege zwischen der Bildung der den Beleg kennzeichnenden Adresse und der Verfilmung unter Aufbringung der Bildmarken verloren gehen oder durch Stauungen einen Platzwechsel vornehmen. All diese und ähnliche – erfahrungsgemäss nicht auszuschliessende – Störungen bedingen, dass nicht nur ein spezieller Beleg falsch adressiert wird, sondern bis zur Feststellung des Fehlers auch eine Vielzahl nachfolgender Belege. Bei der hohen Geschwindigkeit des Verfilmungsablaufs wird dies in der Regel auch nicht festgestellt. Hieraus ergeben sich Fehlleistungen, die bei der Mikroverfilmung bis zu 6% der Gesamtbelegarchivierung auf Filmmaterial betragen können.

In der US-A-4 116 560 (Dragani et al.) ist eine Anordnung zur Mikroverfilmung beschrieben, bei der mehrere Lichtschranken vorgesehen sind, die einen ordentlichen Einlauf des Beleges sicherstellen sollen, wobei zwei Photodetektoren – einer vor dem Einlauf in das Paginierwerk und einer vor der Vorrichtung zur Abgabe der Bildmarken – vorgesehen sind. Hierdurch wird die Zuordnung von Beleg und Bildmarke verbessert, ohne dass jedoch eine wirklich sichere Mikroverfilmung erreicht werden kann.

In der FR-A-1 283 448 ist eine Prüfmethode beschrieben, die bei Sortierstrecken feststellt, ob Karten verloren gingen oder übereinander zu liegen kamen. Das dort beschriebene Sortierverfahren zielt jedoch nicht auf die Mikroverfilmung ab, wie sie Gegenstand der vorliegenden Erfindung ist.

Aus dem Lexikon der Datenverarbeitung, Verlag Moderne Industrie, Wolfgang Dummer & Co., 1969, Seiten 410 und 411 ist es ferner bekannt, durch Prüflesen die Vollständigkeit eines Codes über eine mit aufgezeichnete Sicherungsinformation zu überprüfen und ggf. ein fehlerhaftes Prüfergebnis zur Anzeige zu bringen. Dem Taschenbuch der Informatik von Steinbuch, Weber, Springer Verlag, 1974, Seite 416, ist schliesslich zu entnehmen, bei Lochkarten entsprechend den hohen Anforderungen an eine richtige Übernahme von Information mehr oder minder aufwendige Kontrollen durchzuführen, wie direkte Kontrollen durch optische und induktive Kontrollabtastungen oder Paritätskontrollen.

Der vorliegenden Erfindung liegt die Aufgabe zugrunde, die bei der Verfilmung von Belegen mit anschliessender, zugeordneter Abspeicherung der den Beleg kennzeichnenden Adresse und der Bildadresse auftretenden Fehler weitestgehend zu vermeiden. Diese Aufgabe wird erfindungsgemäss durch ein Verfahren gelöst, wie es in Anspruch 1 beschrieben ist. Durch die Erfindung wird eine eindeutige Konkordanz zwischen der den Beleg kennzeichnenden Adresse und der tatsächlichen Bildadresse auf dem Film sichergestellt, die auch ein einwandfreies Wiederauffinden des Beleges ermöglicht.

Die Erfindung eignet sich besonders für eine ungeordnete Verfilmung von Belegen.

Gemäss einer besonderen Weiterbildung der Erfindung wird der erste Code als prüfbarer Code auf den Beleg aufgebracht und anschliessend prüfgelesen, wobei eine Abspeicherung der einen Beleg kennzeichnenden Adresse zusammen mit der zugehörigen Bildadresse und/oder eine Verfilmung nur dann erfolgt, wenn kein Fehler festgestellt wurde.

Gemäss einer bevorzugten Ausgestaltung der Erfindung wird zumindest die den Beleg kennzeichnende Adresse auf den Beleg mittels eines Paginierwerkes oder als Strichcode aufgebracht, gegebenenfalls neben einen Ziffern- und/oder Buchstabencode, der visuell erfassbar ist.

Als besonders günstig hat es sich erwiesen, wenn die Belege zwischen dem Paginierwerk und der die Verfilmung bewirkenden Kamera zwangsgeführt werden.

Die Fehlerquote lässt sich weiter herabsetzen, wenn das Einlaufen des paginierten Beleges in die Kamera überprüft wird, und die Aufbringung einer Bildmarke auf den Film nur bei Vorliegen eines Beleges durchgeführt wird. Bei Nichteintreffen des nächstfolgenden Beleges bei der Kamera innerhalb eines festgelegten Zeitintervalls wird der Verfilmungsvorgang zweckmässigerweise automatisch unterbrochen.

Damit bei der Weiterverfilmung im Anschluss an eine Betriebsstörung keine Schwierigkeiten mit der Zuordnung der Bildadresse erfolgen, empfiehlt es sich, dass das Paginierwerk in Abhängigkeit von der Gesamtzahl der auf dem Film aufgebrachten Bildmarken weitergestellt wird.

Gemäss einer weiteren Variante dieses Verfahrens wird die im Paginierwerk eingestellte, zur Dokumentation benötigte Ziffernfolge einem Rechner zugeführt, der aus dieser eine Prüfziffer ermittelt, welche auf den Beleg zusätzlich aufpaginiert wird.

Das Anbringen der Prüfziffer vereinfacht bei der Weiterverarbeitung der verfilmten Dokumente die Erfassung derselben in einer EDV-Anlage, sei es direkt von den paginierten Dokumenten oder von dem Film, da bei der Eingabe dieser Daten in den Rechner durch ein entsprechendes Programm anhand der Prüfziffer leicht überprüfbar ist, ob versehentlich Zahlendreher oder Übertragungsfehler vorgenommen wurden, so dass diese nahezu vollständig ausschliessbar sind.

Als besonders geeignet hat es sich erwiesen, wenn die Prüfziffer nach Modulus 11 bestimmt wird.

Die Erfindung eignet sich besonders für eine ungeordnete Verfilmung von Belegen, bei der gemäss einem besonderen Aspekt der erste Code dem Beleg jeweils von einem Rechner zugeordnet wird, wobei der Rechner den Code und gegebenenfalls weitere Informationen gespeichert enthält, und die den Beleg kennzeichnende Adresse zusammen mit der Bildadresse an den Rechner transferiert sowie dort zusammen mit dem ersten Code und der gegebenen weiteren Information gespeichert wird.

Zur weiteren Herabsetzung der Fehlerquote wird eine Bildmarke nur dann auf dem Film aufgebracht, wenn zwischen dem Lesen des ersten Codes und der Ankunft des aufzuzeichnenden Belegs in der die Verfilmung bewirkenden Kamera eine definierte Zeitdauer verstrichen ist. Dies verhindert, dass bei Staus, die auch bei einer Zwangsführung der Belege nicht ganz auszuschliessen sind, in der Zuführung der Belege vom Scanner zur Kamera oder bei einem Verlorengehen von Belegen auf diesem Weg keine falsche Bildadresse entsteht. Um mögliche Fehler beim Lesen des Codes zu verhindern, die insbesondere dann auftreten können, wenn der Code bei der Handhabung des Beleges verschmutzt oder beschädigt wurde, wird dem Code bereits in dem Rechner, der ihn vergibt, eine Prüfziffer zugeordnet, wobei nach dem Lesen des Codes und vor der Abspeicherung der den Beleg kennzeichnenden Adresse dessen Richtigkeit überprüft wird.

Der Aufzeichnungsvorgang wird automatisch unterbrochen, wenn nach Ablauf einer definierten Zeitdauer keine Bildmarke abgegeben ist oder wenn der gelesene erste Code sich als falsch erwiesen hat.

Durch eine visuelle oder akustische Anzeige der Art des bei der Aufzeichnung auftretenden Fehlers und/oder durch ein Auswerfen des entsprechenden Beleges bzw. durch ein Versehen desselben mit einer Markierung wird erreicht, dass der entsprechende Fehler leicht behebbar und das falsch adressierte Dokument in einer Wiederholung des Verfilmungsvorgangs ordnungsgemäss archiviert wird.

Es ist desweiteren zweckmässig, die durch das fortlaufende Aufsummieren der Bildmarke erzeugte Bildadresse mit Signalen, welche Filmnummer und/oder Datum oder andere Filmparameter kennzeichnen, zu vereinigen.

Gemäss einem weiteren Aspekt der Erfindung wird eine Vorrichtung in Vorschlag gebracht, die einen Speicher enthält, dem die im Paginierwerk eingestellte Ziffernfolge zugeführt wird, einen Zwischenspeicher, dem die jeweilige Bildadresse zugeführt wird, ein einstellbares Verzögerungsglied, das zwischen den Speicher und den Zwischenspeicher geschaltet ist und zur Zeitkompensation für den Transportweg der Belege zwischen dem Paginierwerk und der Aufzeichnungseinrichtung dient, und einen Komparator zum Vergleich von in einer bestimmten zeitlichen Aufeinanderfolge dem Speicher bzw. dem Zwischenspeicher zugeführten Signalen, sowie einen Zähler zur automatischen Einstellung der nachfolgenden Paginierziffer, der in Wirkverbindung mit der Einstellvorrichtung des Paginierwerks steht.

Zweckmässigerweise ist für die Errechnung einer Prüfziffer aus der in das Paginierwerk eingestellten Ziffernfolge ein Rechner vorgesehen, der das Paginierwerk steuert.

Gemäss einer weiteren Variante der Erfindung ist eine Vorrichtung mit einer Kamera vorgesehen, die mit einer Einrichtung zur selektiven Abgabe von auf dem Film aufzeichenbaren Bildmarken versehen ist, mit einer Zwangsführung für die aufzuzeichnenden Belege und mit einem Rechner, der jedem Beleg einen ersten Code zuordnet, sowie mit einem vor der Aufzeichnungseinrichtung angeordneten Abtaster, der den Code auf dem Beleg liest, mit einem ersten Zwischenspeicher, dem die von dem Abtaster ermittelten Signale über einen die Signale überprüfenden Prüfziffernrechner zugeführt werden, mit einem zweiten Zwischenspeicher, dem die Bildadresse zugeführt wird, und mit einer Verknüpfungsschaltung welche die vom ersten und vom zweiten Zwischenspeicher kommenden Signale vergleicht und an den Rechner zur Speicherung weiterleitet.

Mit Vorteil ist der Rechner so ausgebildet, dass er dem ersten Code eine Prüfziffer zuordnet, während der Prüfziffernrechner zwischen dem Abtaster und dem ersten Zwischenspeicher angeordnet ist.

In einer bevorzugten Weiterbildung enthält diese Vorrichtung ein Verzögerungsglied, über welches das vom Abtaster gelieferte, überprüfte Signal einem Komparator zuführbar ist, an den des weiteren eine in der Bahn zum Bewegen des Belegs in seine Aufzeichnungsposition in der Kamera gelegene Lichtschranke derart angeschlossen ist, dass das Ausgangssignal des Komparators den Aufzeichnungsvorgang in der Kamera und/oder die Vorrichtung zur Abgabe der Bildmarke und/oder den Vorschub des Belegs steuert.

Zwischen Komparator und Verschluss der Kamera und/oder der Vorrichtung zur Bildung einer Bildmarke ist zweckmässigerweise ein Verzögerungsglied geschaltet.

Für eine rasche Mikroverfilmung aufeinanderfolgender Belege ist es günstig, wenn ein einstellbares Zeitverschiebungsglied zwischen den ersten Zwischenspeicher und den Komparator geschaltet ist.

Die beiliegende Zeichnung zweier bevorzugter
Ausführungsbeispiele dient der weiteren Erläuterung der Erfindung.

Fig. 1 zeigt in schematischer Darstellung ein
erstes Ausführungsbeispiel von einer Vorrichtung
zur Verfilmung von Belegen.

Fig. 2 zeigt in schematischer Darstellung ein
zweites Ausführungsbeispiel von einer Vorrichtung zur Verfilmung von Belegen.

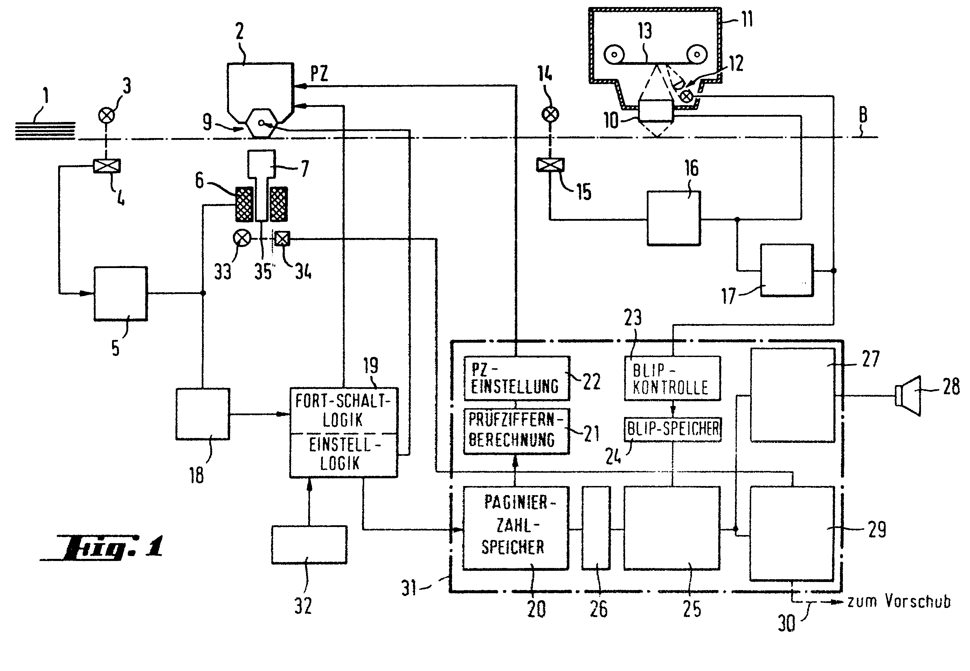

Bei der in Fig. 1 dargestellten ungeordneten
Verfilmung von Belegen werden von einem Stapel
wahllos aufeinanderfolgende Belege 1 mittels eines nicht dargestellten Einzuges Einzelbelege
nacheinander einem Paginierer 2 zugeführt, wobei sie an einer Lichtschranke vorbeilaufen, die
von einer Lampe 3 und einer Fotozelle 4 gebildet
ist. Das Ausgangssignal der Fotozelle 4 gelangt
über eine Steuerschaltung 5 mit einstellbarer Zeitverzögerung zum einen zu einem Betätigungsmagneten 6 für den Hammer 7, so dass dieser eine
definierte Zeit, nachdem der Beleg 1 die Lichtschranke durchlaufen hat, betätigt wird. Der Hammer 7 schlägt hierdurch in Richtung auf ein Stempelwerk 9, so dass der zwischen diesem und dem
Hammer gelegene Beleg bedruckt wird. Der Beleg
wird anschliessend von einem in der Zeichnung
nicht dargestellten Zwangsvorschub erfasst und
vor den Verschluss 10 einer Kamera 11 transportiert, längs der strichliniert wiedergegebenen Linie B, die den Belegdurchlauf andeutet. Die Kamera enthält in ihrem Inneren einen lediglich
schematisch angedeuteten, aus einer kurzzeitig
einschaltbaren Lichtquelle und einer entsprechenden Optik bestehenden Bildmarken-Setzer
12, der auf dem Film 13 neben der Aufnahme des
jeweiligen Belegs 1 eine Bildmarke setzt, die in
bekannter Weise bei der Wiederaufsuchung des
Beleges das Auffinden des Bildes auf dem Film
ermöglicht.

Die Steuerung des Kameraverschlusses 10 und
die Betätigung des Bildmarken-Setzers 12 erfolgt
über eine weitere Lichtschranke, die aus einer
Lichtquelle 14 und einem Fotoelement 15 gebildet
ist. Das Ausgangssignal des Fotoelements 15 betätigt eine Steuerschaltung 16 und über eine weitere Steuerschaltung 17 den Bildmarken-Setzer
12, wobei die Steuerschaltungen 16 und 17 je eine
Zeitverzögerung bewirken.

Das Ausgangssignal der Steuerschaltung 5 wird
des weiteren über eine Zeitverzögerungsschaltung 18 einer Einstell- und Fortschaltlogik 19 zugeführt, welche eine Einstellung des Stempelwerks 9
und eine Fortschaltung desselben im Anschluss
an jeden Paginiervorgang bewirkt. Die Einstell-
und Fortschaltlogik 19 steht des weiteren in Wirkverbindung mit einem Paginierzahlspeicher 20,
aus dem ein Prüfziffernrechner 21 die jeweilige
Paginierzahl abruft und aus dieser nach einem geeigneten Algorithmus eine Prüfziffer berechnet,
die über eine Prüfziffereinstellogik 22, wie durch
den Pfeil PZ angedeutet, einem zusätzlichen
Stempelrad des Paginierers 2 zugeführt wird.

Das Ausgangssignal der Steuerschaltung 17
wird des weiteren einem Bildmarken-Zähler 23
und einem diesem nachgeschalteten Zwischenspeicher 24 zugeführt. Ein Komparator 25 steht in
Wirkverbindung mit dem Zwischenspeicher 24 sowie dem Paginierzahlspeicher 20, wobei eine
Verzögerungsschaltung 26 den zwischen dem Paginiervorgang und dem Paginierer 2 und dem Belichtungsvorgang in der Kamera 11 für den gleichen Beleg verstrichenen Zeitraum ausgleicht, so
dass durch den Vergleich sichergestellt ist, dass
die den Beleg kennzeichnende Adresse bzw. die
entsprechende Ziffernfolge in der Paginierzahl
auch einer entsprechenden Bildadresse auf dem
Film 13 entspricht. Bei fehlender Übereinstimmung erzeugt der Komparator 25 ein Ausgangssignal, das zum einen einen Fehlermelder 27 ansteuert, der ein optisches oder akustisches Anzeigegerät 28 bedient, zum anderen eine Logik 29,
welche, wie durch den strichlinierten Pfeil 30 angedeutet, auf den Vorschub der Belege einwirkt
und die gesamte Anlage automatisch anhält. Die
Umrahmung 31 deutet an, dass die Bauelemente
20 bis 27 und 29 zu einer Baueinheit zusammengefasst sind.

Mit dem Bezugszeichen 32 ist ein Terminal angedeutet, das einen manuellen Eingriff für die
Einstell- und Fortschaltlogik 19 bewirkt, so dass zu
Beginn des Verfilmungsvorgangs die Paginierzahl
einstellbar ist und auch gegebenenfalls willkürliche Eingriffe bezüglich der Paginierzahl vornehmbar sind.

Eine aus einer Lichtquelle 33 und einer Fotozelle 34 gebildete weitere Lichtschranke, in deren
Weg ein Ansatz 35 des Hammers 7 hineinragt,
stellt sicher, dass die im Stempelwerk 9 eingestellte Paginierzahl einschliesslich der Prüfziffer
durch Betätigung des Hammers auch auf den Beleg 1 übertragen wird. Das von der Fotozelle 34
ausgehende Signal wird der Logik 29 zugeleitet,
so dass bei Auftreten eines entsprechenden Fehlers die Anlage ebenfalls angehalten wird.

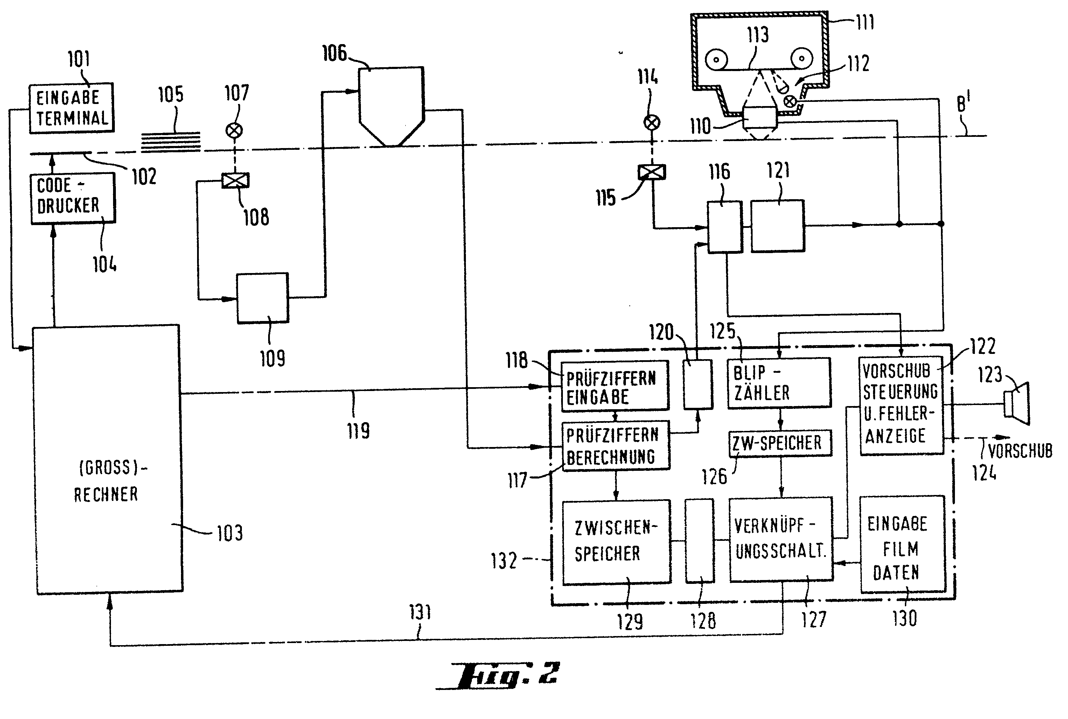

Im folgenden wird das in Fig. 2 dargestellte
zweite Beispiel einer erfindungsgemässen ungeordneten Verfilmung von Belegen näher erläutert.

Über ein Eingabeterminal 101 werden spezielle
Daten eines einzelnen Beleges 102 an einen
Grossrechner 103 übermittelt, der gegebenenfalls
unter Zufügung weiterer im Zusammenhang mit
dem Beleg bereits gespeicherter Daten einen ersten Code für den Beleg 102 festlegt. Der Code
enthält neben anderen Daten eine entsprechende,
dem Beleg zugeordnete Adresse und eine aus
dem Code nach einem bestimmten Modulus berechnete Prüfziffer. Vom Grossrechner 103 wird
der erste Code einschliesslich der Prüfziffer zu
einem Code-Drucker 104 gegeben, der den Code
und die Prüfziffer direkt auf den Beleg aufdruckt
bzw. mit Lochstempel paginiert oder auf einen
entsprechenden Aufkleber, der dem Beleg angeheftet wird. In der Regel wird der Code dabei sowohl in visuell lesbarer Klarschrift, d.h. Buchstaben und/oder Ziffern, als auch in einer für einen Scanner gut lesbaren Form, z.B. als Strichcode, ausgedruckt. Der mit dem ersten Code versehene Beleg wird sodann mit weiteren in entsprechender Weise codierten Belegen gesammelt und als Stapel 105 der Mikroverfilmung zugeführt.

Von dem Stapel 105 wahllos aufeinanderfolgende Belege 102 werden mittels eines nicht dargestellten Einzuges Einzelbelege nacheinander einem Laserscanner 106 zugeführt, wobei sie an einer Lichtschranke vorbeilaufen, die von einer Lampe 107 und einer Fotozelle 108 gebildet ist. Das Ausgangssignal der Fotozelle 108 gelangt über eine Steuerschaltung 109 mit einstellbarer Zeitverzögerung zu dem Laserscanner 106, der den Code auf dem Beleg liest. Der Beleg wird anschliessend von einem in der Zeichnung nicht dargestellten Zwangsvorschub erfasst und vor den Verschluss einer Kamera 111 transportiert, längs der strichliniert wiedergegebenen Linie B, die den Belegdurchlauf andeutet. Die Kamera 111 enthält in ihrem Inneren einen lediglich schematisch angedeuteten, aus einer kurzzeitig einschaltbaren Lichtquelle und einer entsprechenden Optik bestehenden Bildmarken-Setzer 112, der auf dem Film 113 neben der Aufnahme des jeweiligen Beleges 102 eine Bildmarke setzt, die in bekannter Weise bei der Wiederaufsuchung des Beleges das Auffinden der Bildadresse auf dem Film ermöglicht.

Die Steuerung des Kameraverschlusses 110 und die Betätigung des Bildmarken-Setzers 112 erfolgen mit Hilfe einer weiteren Lichtschranke, die aus einer Lichtquelle 114 und einem Fotoelement 115 gebildet ist. Das Ausgangssignal des Fotoelements 115 wird einem Eingang eines Komparators 116 zugeführt. Das vom Laserscanner 106 erhaltene Ausgangssignal wird einem Prüfziffernrechner 117 zugeführt. Der Prüfziffernrechner 117 ist über eine Prüfzifferneingabe 118, welche fakultativ, wie durch Leitung 119 angedeutet, vom Grossrechner direkt gesteuert werden kann, auf den zur Bestimmung der Prüfziffern im Rechner verwendete Algorithmus eingestellt, so dass er in der Lage ist, den vom Laserscanner 106 gelesenen Code auf seine Richtigkeit zu überprüfen. Das entsprechende Ausgangssignal des Prüfziffernrechners 117 wird über ein einstellbares Verzögerungsglied 120 einem weiteren Eingang des Komparators 116 zugeführt.

Falls das vom Fotoelement 115 dem Komparator 116 zugeführte Signal und das von dem Prüfziffernrechner 117 über das Verzögerungsglied 120 dem Komparator 115 zugeführte Signal koinzident einlaufen, und das vom Prüfziffernrechner 117 gelieferte Signal gleichzeitig anzeigt, dass der Code richtig gelesen wurde, wird von dem Komparator 116 ein Steuersignal ausgesandt, das über eine Zeitverzögerungsschaltung 121 den Kameraverschluss 110 und den Bildmarken-Setzer 112 auslöst. Anderenfalls wird von dem Komparator 116 ein Fehleranzeigesignal zu einer Vorschub- und Fehleranzeigesteuerung 122 geleitet. Die Vorschub- und Fehleranzeigesteuerung betätigt ein optisches oder akustisches Anzeigegerät 123 sowie eine weitere, nicht dargestellte Logik, die, wie durch den strichlinierten Pfeil 124 angedeutet, auf den Vorschub der Belege einwirkt und die gesamte Anlage automatisch anhält. Das von der zeitverzögerungsschaltung 121 ausgehende Steuersignal und/oder ein Rückmeldesignal des Bildmarken-Setzers 112 werden des weiteren einem Bildmarken-Zähler 125 und einem diesem nachgeschalteten Zwischenspeicher 126 zugeführt. Eine Verknüpfungsschaltung 127 steht in Wirkverbindung mit dem Zwischenspeicher 126, sowie über eine Verzögerungsschaltung 128 mit einem weiteren Zwischenspeicher 129, der vor dem durch den Prüfziffernrechner 117 überprüften ersten Code zumindest die Adresse des Belegs zwischenspeichert. Die Verzögerungsschaltung 128 gleicht den zwischen dem Lesen des Codes und dem Belichtungsvorgang in der Kamera 111 für den gleichen Beleg verstrichenen Zeitraum aus, so dass sichergestellt ist, dass die von der Bildmarkenzahl festgelegte Bildadresse des Beleges bei ordnungsgemässer Verfilmung auch der den Beleg kennzeichnenden Adresse entspricht. Die Bildadresse kann durch weitere Angaben wie beispielsweise über die Rollennummer des Films, über den Tag der Verfilmung usw., ergänzt werden, welche über ein Terminal «Eingabe Filmdaten» 120 in die Verknüpfungsschaltung 127 eingegeben werden. Die den Beleg kennzeichnende und in dem Zwischenspeicher 129 gespeicherte Adresse wird in der Verknüpfungsschaltung 127 mit der Bildadresse verglichen und anschliessend, wie durch die Leitung 131 angedeutet, dem Grossrechner 103 zugeführt, der die Bildadresse sodann derart abspeichert, dass sie über bzw. mit dem ersten Code abgerufen werden kann. Die Umrahmung 132 deutet an, dass die von ihm eingeschlossenen Bauelemente 117, 118, 120, 122 sowie 125 bis 130 zu einer Baueinheit zusammengefasst sind.

**Patentansprüche**

1. Verfahren zur Verfilmung von Belegen, bei dem die Belege mit einem ersten Code versehen und anschliessend unter Aufbringung von Bildmarken verfilmt werden, wobei von dem ersten Code eine den Beleg kennzeichnende Adresse gebildet und die auf den Film aufbelichteten Bildmarken fortlaufend aufsummiert werden und das Ergebnis als jeweilige Bildadresse in Zuordnung zu der den Beleg kennzeichnenden Adresse abgespeichert wird, dadurch gekennzeichnet, dass nach Einstellung einer neuen Bildadresse diese mit der zuletzt gespeicherten, den Beleg kennzeichnenden Adresse auf Übereinstimmung verglichen wird.

2. Verfahren nach Anspruch 1, dadurch gekennzeichnet, dass der erste Code als prüfbarer Code auf den Beleg aufgebracht und anschliessend prüfgelesen wird, wobei eine Abspeicherung der einen Beleg kennzeichnenden Adresse zusammen mit der zugehörigen Bildadresse und/oder eine Verfilmung nur dann erfolgt, wenn kein Fehler festgestellt wurde.

3. Verfahren nach einem der vorstehenden Ansprüche, dadurch gekennzeichnet, dass zumindest die den Beleg kennzeichnende Adresse auf den Beleg mittels eines Paginierwerkes oder als Strichcode aufgebracht wird.

4. Verfahren nach Anspruch 3, dadurch gekennzeichnet, dass die Belege zwischen dem Paginierwerk und der die Verfilmung bewirkenden Kamera zwangsgeführt werden.

5. Verfahren nach einem der Ansprüche 3 oder 4, dadurch gekennzeichnet, dass das Einlaufen des paginierten Beleges in die Kamera überprüft wird, und dass die Aufbringung einer Bildmarke auf den Film nur bei Vorliegen eines Beleges durchgeführt wird.

6. Verfahren nach Anspruch 5, dadurch gekennzeichnet, dass bei Nichteintreffen des nächstnachfolgenden Beleges bei der Kamera innerhalb eines festgelegten Zeitintervalls der Verfilmungsvorgang automatisch unterbrochen wird.

7. Verfahren nach einem der Ansprüche 3 bis 6, dadurch gekennzeichnet, dass das Paginierwerk in Abhängigkeit von der Gesamtzahl der auf dem Film aufgebrachten Bildmarken weitergestellt wird.

8. Verfahren nach einem der Ansprüche 3 bis 7, dadurch gekennzeichnet, dass die im Paginierwerk eingestellte, zur Dokumentation benötigte Ziffernfolge einem Rechner zugeführt wird, der aus dieser eine Prüfziffer ermittelt, welche auf den Beleg zusätzlich aufpaginiert wird.

9. Verfahren nach Anspruch 1 oder 2, dadurch gekennzeichnet, dass der erste Code dem Beleg jeweils von einem Rechner zugeordnet wird, wobei der Rechner den Code und gegebenenfalls weitere Informationen gespeichert enthält, und dass die den Beleg kennzeichnende Adresse zusammen mit der Bildadresse an den Rechner transferiert sowie dort zusammen mit dem ersten Code und der gegebenen weiteren Information gespeichert wird.

10. Verfahren nach Anspruch 9, dadurch gekennzeichnet, dass eine Bildmarke nur dann auf dem Film aufgebracht wird, wenn zwischen dem Lesen des ersten Codes und der Ankunft des aufzuzeichnenden Belegs in der die Verfilmung bewirkenden Kamera eine definierte Zeitdauer verstrichen ist.

11. Verfahren nach Anspruch 10 oder 11, dadurch gekennzeichnet, dass der Aufzeichnungsvorgang automatisch unterbrochen wird, wenn nach dem Ablauf einer definierten Zeitdauer keine Bildmarke abgegeben ist oder wenn der gelesene erste Code sich als falsch erwiesen hat.

12. Verfahren nach einem der vorstehenden Ansprüche, dadurch gekennzeichnet, dass die Art des bei der Aufzeichnung auftretenden Fehlers visuell oder akustisch angezeigt und/oder der entsprechende Beleg ausgeworfen oder mit einer Markierung versehen wird.

13. Vorrichtung zur Ausübung des Verfahrens nach einem der Ansprüche 3 bis 8, gekennzeichnet durch einen Speicher (20), dem die im Paginierwerk (2) eingestellte Ziffernfolge zugeführt wird, einen Zwischenspeicher (24), dem die jeweilige Bildadresse zugeführt wird, ein einstellbares Verzögerungsglied (26), das zwischen den Speicher (20) und den Zwischenspeicher (24) geschaltet ist und zur Zeitkompensation für den Transportweg der Belege zwischen dem Paginierwerk (2) und der Aufzeichnungseinrichtung (11) dient, und einen Komparator (25) zum Vergleich von in einer bestimmten zeitlichen Aufeinanderfolge dem Speicher (20) bzw. dem Zwischenspeicher (24) zugeführten Signalen, sowie durch einen Zähler (19) zur automatischen Einstellung der nächstnachfolgenden Paginierziffer, der in Wirkverbindung mit der Einstellvorrichtung des Paginierwerks (2) steht.

14. Vorrichtung nach Anspruch 13, dadurch gekennzeichnet, dass für die Errechnung einer Prüfziffer aus der in das Paginierwerk (2) eingestellten Ziffernfolge ein Rechner (21) vorgesehen ist, der das Paginierwerk (2) steuert.

15. Vorrichtung zur Ausübung des Verfahrens nach einem der Ansprüche 3 sowie 9 bis 12, mit einer Kamera (111), die mit einer Einrichtung (112) zur selektiven Abgabe von auf dem Film (113) aufzeichenbaren Bildmarken versehen ist, mit einer Zwangsführung für die aufzuzeichnenden Belege und mit einem Rechner (103), der jedem Beleg (102) eine ersten Code zuordnet, sowie mit einem vor der Aufzeichnungseinrichtung (111) angeordneten Abtaster (106), der den Code auf dem Beleg (102) liest, einen ersten Zwischenspeicher (129), dem die von dem Abtaster (106) ermittelten Signale über einen die Signale überprüfenden Prüfziffernrechner (117) zugeführt werden, einen zweiten Zwischenspeicher (126), dem die Bildadresse zugeführt wird, und eine Verknüpfungsschaltung (127), welche die vom ersten und vom zweiten Zwischenspeicher (129, 126) kommenden Signale verknüpft und an den Rechner (103) zur Speicherung weiterleitet.

16. Vorrichtung nach Anspruch 15, dadurch gekennzeichnet, dass der Rechner (103) dem ersten Code eine Prüfziffer zuordnet, und dass der Prüfziffernrechner (117) zwischen dem Abtaster (106) und dem ersten Zwischenspeicher (129) angeordnet ist.

17. Vorrichtung nach Anspruch 16, gekennzeichnet durch ein Verzögerungsglied (120), über welches das vom Abtaster (106) gelieferte, überprüfte Signal einem Komparator (116) zuführbar ist, an den des weiteren eine in der Bahn zum Bewegen des Belegs (102) in seine Aufzeichnungsposition in der Kamera (111) gelegene Lichtschranke (114, 115) derart angeschlossen ist, dass das Ausgangssignal des Komparators (116) den Aufzeichnungsvorgang in der Kamera (111) und/oder die Vorrichtung (112) zur Abgabe der Bildmarke und/oder den Vorschub (124) des Belegs (102) steuert.

18. Vorrichtung nach Anspruch 17, dadurch gekennzeichnet, dass zwischen den Komparator (116) und den Verschluss der Kamera (111) und/oder der Vorrichtung (112) zur Bildung einer Bildmarke ein Verzögerungsglied (121) geschaltet ist.

19. Vorrichtung nach einem der Ansprüche 15 bis 18, dadurch gekennzeichnet, dass ein einstellbares Verzögerungsglied (128) zwischen den ersten Zwischenspeicher (129) und die Verknüpfungsschaltung (127) geschaltet ist.

## Claims

1. Process for filming documents in which the document is provided with a first code and then filmed with the application of image marks, wherein an address characterising the document is formed from the first code and the image marks exposed onto the film are continuously summed and the result stored as the respective image address in association with the address characterising the document, characterised in that after the setting of a new image address this is compared for matching with the last stored address characterising in the document.

2. Process according to claim 1, characterised in that the first code is applied as a checkable code on to the document and is then proof-read, wherein a storage of the address characterising a document together with the respective image address and/or filming only then takes place if no error is detected.

3. Process according to one of the preceding claims, characterised in that at least the address characterising the document is applied to the document by means of a pagination unit or as a bar code.

4. Process according to claim 3, characterised in that the document is positively guided between the pagination unit and the camera effecting filming.

5. Process according to one of claims 3 or 4, characterised in that the running in of the paginated document into the camera is checked and that the application of an image marking on to the film is only carried out on the presence of a document.

6. Process according to claim 5, characterised in that on the non-entry of the next succeeding document at the camera within a pre-determined time interval, the filming process is automatically interrupted.

7. Process according to one of claims 3 to 6, characterised in that the pagination unit is further adjusted dependent on the total number of the image marks applied to the film.

8. Process according to one of claims 3 to 7, characterised in that the sequence of numbers set in the pagination unit and required for the documentation is fed to a calculator which determines from this a check number which is additionally paginated onto the document.

9. Process according to claim 1 or 2, characterised in that the first code is applied to the document in each case by a calculator wherein the calculator contains stored the code and optionally further information and that the address characterised in the document together with the image address is transferred to the calculator as well as stored there together with the first code and the given further information.

10. Process according to claim 9, characterised in that an image mark is only then applied to the film if between the reading of the first code and the arrival of the document to be recorded in the camera effecting filming, a defined period of time has elapsed.

11. Process according to claim 10 or 11, characterised in that the recording process is automatically interrupted if after the expiry of a defined period of time no image mark is emitted or if the first code read has been determined as false.

12. Process according to one of the preceding claims, characterised in that the type of error arising on the recording is visually or acoustically indicated and/or the corresponding document is thrown out or provided with a marking.

13. Apparatus for carrying out the process according to one of claims 3 to 8, characterised by a store (20) to which the sequence of numbers set in the pagination unit (2) is fed, an intermediate store (24) to which the respective image address is fed, an adjustable delay unit (26) which is connected between the store (20) and the intermediate store (24) and which serves for time compensation for the transport path of the document between the pagination unit (2) and the inscription unit (11), and a comparator (25) for comparison of signals fed in a given time sequence to the store (20) or the intermediate store (24) respectively, as well as by a counter (19) for the automatic setting of the next following pagination number which is in operative relationship with the setting device of the pagination unit (2).

14. Apparatus according to claim 13, characterised in that for the calculation of a check number from the sequences of numbers set in the pagination unit (2) a calculator (21) is provided which controls the pagination unit (2).

15. Apparatus for carrying out the process according to one of claims 3 as well as 9 to 12, with a camera (111) which is provided with a device (112) for the selective emission of image marks which can be recorded on the film (113), with a positive feed for the documents to be inscribed and with a calculator (103) which assigns to each document (102) a first code, as well as with a sensor (106) arranged before the inscription device (111) which reads the code on the document (102), a first intermediate store (129), to which the signals determined by the sensor (106) are fed via a check number calculator (117) which checks the signals, a second intermediate store (126) to which the image address is fed and a combination circuit (127) which combines the signals coming from the first and from the second intermediate stores (129, 126) and which feeds them further to the calculator (103) for storage.

16. Apparatus according to claim 15, characterised in that the calculator (103) associates a check number to the first code and that the check number calculator (117) is arranged between the sensor (106) and the first intermediate store (129).

17. Apparatus according to claim 16, characterised by a delay member (120) via which the checked signal fed from sensor (106) can be fed to a comparator (116) to which furthermore a light gate (114, 115) lying in the path of movement of the document (102) into its registration position in the camera (111) is connected in such a way that the output signal of the comparator (116) controls the inscription process in the camera (111) and/or the device (112) for emitting the image marks and/or the forward feed (124) of the document (102).

18. Apparatus according to claim 17, characterised in that between the comparator (116) and the shutter of the camera (111) and/or the device (112) performing an image mark, a delay member (121) is connected.

19. Apparatus according to one of claims 15 to 18, characterised in that an adjustable delay member (128) is connected between the first intermediate store (129) and the combination circuit (127).

## Revendications

1. Procédé de filmage de documents, dans lequel on munit les documents d'un premier code puis on les filme en y inscrivant des repères d'images, étant précisé qu'à partir du premier code se forme une adresse qui caractérise le document, les repères d'images, inscrits sur le film par procédé photographique, sont additionnés à la suite et le résultat est mémorisé en tant qu'adresse respective d'image en correspondance avec l'adresse caractérisant le document, caractérisé en ce qu'après obtention d'une nouvelle adresse d'image par incrémentation, celle-ci est comparée, au point de vue coïncidence, avec l'adresse mémorisée en dernier lieu et caractérisant le document.

2. Procédé selon la revendication 1, caractérisé en ce que le premier code est inscrit sur le document en tant que code contrôlable et qu'il est ensuite lu à titre de contrôle, une mémorisation de l'adresse qui caractérise le document en même temps que de l'adresse d'image correspondante et/ou un filmage ne se faisant que si aucune erreur n'a été déterminée.

3. Procédé selon l'une des revendications précédentes, caractérisé en ce que l'on inscrit sur le document, au moyen d'un dispositif de pagination ou sous forme de code à barres au moins l'adresse qui caractérise le document.

4. Procédé selon la revendication 3, caractérisé en ce que les documents sont guidés positivement entre le dispositif de pagination et la caméra qui opère le filmage.

5. Procédé selon l'une des revendications 3 ou 4, caractérisé en ce que l'entrée du document paginé dans la caméra est surveillée; et en ce que l'inscription d'un repère d'image sur le film ne se fait qu'en présence d'un document.

6. Procédé selon la revendication 5, caractérisé en ce qu'en cas de non-apparition, près de la caméra, du document qui vient immédiatement à la suite durant un intervalle de temps déterminé, le processus de filmage est automatiquement interrompu.

7. Procédé selon l'une des revendications 3 à 6, caractérisé en ce que le dispositif de pagination est incrémenté en fonction du nombre total de repères d'image inscrits sur le film.

8. Procédé selon l'une des revendications 3 à 7, caractérisé en ce que la suite des chiffres nécessaire pour la documentation et obtenue dans le dispositif de pagination par incrémentation est amenée à un ordinateur qui, à partir d'elle, établit un chiffre-clé de contrôle que l'on ajoute à la pagination du document.

9. Procédé selon la revendication 1 ou 2, caractérisé en ce que le premier code est respectivement attribué au document par un ordinateur, l'ordinateur contenant en mémoire le code et éventuellement d'autres informations; et en ce que l'on transfère dans l'ordinateur l'adresse qui caractérise le document en même temps que l'adresse d'image et qu'on les y mémorise en même temps que le premier code et que l'autre information fournie.

10. Procédé selon la revendication 9, caractérisé en ce que l'on n'inscrit un repère d'image sur le film que si, entre la lecture du premier code et l'arrivée, dans la caméra qui opère le filmage, du document sur lequel doit se faire l'inscription s'est écoulé un intervalle de temps défini.

11. Procédé selon la revendication 10 ou 11, caractérisé en ce que le processus d'inscription est automatiquement interrompu si, après le déroulement d'un intervalle de temps défini, aucun repère d'image n'est émis ou si le premier code lu s'est révélé comme faux.

12. Procédé selon l'une des revendications précédentes, caractérisé en ce que le type d'erreur qui se produit lors de l'inscription est indiqué par voie optique ou acoustique et/ou que le document correspondant est rejeté ou muni d'un marquage.

13. Dispositif pour la mise en œuvre du procédé selon l'une des revendications 3 à 8, caractérisé par une mémoire (20), dans laquelle on amène la suite des chiffres obtenue par incrémentation dans le dispositif de pagination (2); par une mémoire intermédiaire (24), dans laquelle on amène l'adresse d'image respective; par un élément temporisateur réglable (26) qui est mis en circuit entre la mé-mémoire (20) et la mémoire intermédiaire (24) et qui sert à compenser le temps nécessaire pour le transport des documents entre le dispositif de pagination (2) et le dispositif d'inscription (11); et par un comparateur (25) prévu pour comparer des signaux amenés à la mémoire (20) et à la mémoire intermédiaire (24) dans une succession temporelle déterminée; ainsi que par un compteur (19) qui est prévu pour incrémenter automatiquement le chiffre de pagination qui vient immédiatement à la suite et qui est en liaison positive avec le mécanisme d'incrémentation du dispositif de pagination (2).

14. Dispositif selon la revendication 12, caractérisé en ce que pour le calcul d'un chiffre-clé de contrôle à partir de la succession de chiffres obtenue par incrémentation dans le dispositif de pagination (2), il est prévu un ordinateur (21) qui commande le dispositif de pagination (2).

15. Dispositif pour la mise en œuvre du procédé selon l'une des revendications 3 et 9 à 12, compor-

tant une caméra (111) qui est munie d'un mécanisme (112) pour émettre sélectivement des repères d'image qui s'inscrivent sur le film (113); comportant aussi un guidage positif pour les documents sur lesquels doivent se faire les inscriptions et comportant aussi un ordinateur (103), qui attribue à chaque document (102) un premier code; ainsi qu'un détecteur (106) qui est disposé avant le dispositif d'inscription (111) et qui lit le code sur le document (102); comportant aussi une première mémoire intermédiaire (129) à laquelle les signaux émis par le détecteur (106) sont amenés par l'intermédiaire d'un calculateur de chiffres-clés de contrôle (117) qui vérifie les signaux, une seconde mémoire intermédiaire (126) à laquelle on amène l'adresse d'image, et un circuit de liaison logique (127) qui relie logiquement les signaux provenant de la première et de la.seconde mémoires intermédiaires (129, 126) et les transmet à l'ordinateur (103) pour mémorisation.

16. Dispositif selon la revendication 15, caractérisé en ce que l'ordinateur (103) attribue au premier code un chiffre-clé de contrôle; et en ce que le calculateur des chiffres-clés de contrôle (117) est disposé entre le détecteur (106) et la première mémoire intermédiaire (129).

17. Dispositif selon la revendication 16, caractérisé par un organe de temporisation (120) par l'intermédiaire duquel on peut amener le signal, émis par le détecteur (106) et vérifié, à un comparateur (116) auquel est, par ailleurs, reliée une cellule photoélectrique (114, 115), placée sur le chemin parcouru par le document (102) pour venir dans sa position d'inscription dans la caméra (111), de façon telle que le signal de sortie du comparateur (116) commande le processus d'inscription dans la caméra (111) et/ou le mécanisme (112) d'émission du repère d'image et/ou l'avance (124) du document (102).

18. Dispositif selon la revendication 17, caractérisé en ce qu'entre le comparateur (116) et l'obturateur de la caméra (111) et/ou le mécansime (112) de formation d'un repère d'image est mis en circuit un organe de temporisation (121).

19. Dispositif selon l'une des revendications 15 à 18, caractérisé en ce qu'un organe de temporisation réglable (128) est mis en circuit entre la première mémoire intermédiaire (129) et le circuit de liaison logique (127).

**Fig. 1**

101 EINGABE TERMINAL

104 CODE-DRUCKER

105

102

107

108

106

109

114

110

111

113

112

B'

115

116 121

118 PRÜFZIFFERN EINGABE

117 PRÜFZIFFERN BERECHNUNG

119

120

125 BLIP-ZÄHLER

126 ZW-SPEICHER

122 VORSCHUB STEUERUNG U.FEHLER-ANZEIGE

123

124 VORSCHUB

103 (GROSS)-RECHNER

132 ZWISCHEN-SPEICHER

129

128

127 VERKNÜPF-UNGSSCHALT.

130 EINGABE FILM DATEN

131

0 096 388

*Fig. 2*